Europäisches Patentamt

European Patent Office

Office européen des brevets

(19)

(11) **EP 0 875 731 B1**

(12) **EUROPEAN PATENT SPECIFICATION**

(45) Date of publication and mention
of the grant of the patent:
**23.07.2003   Bulletin 2003/30**

(51) Int Cl.[7]: **G01C 21/20**, G08G 1/0969

(21) Application number: **98303368.9**

(22) Date of filing: **30.04.1998**

(54) **Navigation apparatus**

Navigationsvorrichtung

Dispositif de navigation

(84) Designated Contracting States:
**DE FR GB**

(30) Priority:  **02.05.1997   JP 11481697**

(43) Date of publication of application:
**04.11.1998   Bulletin 1998/45**

(73) Proprietor: **PIONEER ELECTRONIC
CORPORATION
Meguro-ku, Tokyo (JP)**

(72) Inventors:
 • **Kaneko, H., c/o Pioneer Electronic Corporation
Ohaza Yamada, Kawagoe-shi, Saitama (JP)**
 • **Matsumoto, Y.,
c/o Pioneer Electronic Corporation
Ohaza Yamada, Kawagoe-shi, Saitama (JP)**

 • **Okamoto, T., c/o Pioneer Electronic Corporation
Ohaza Yamada, Kawagoe-shi, Saitama (JP)**
 • **Endo, Isao, c/o Pioneer Electronic Corporation
Ohaza Yamada, Kawagoe-shi, Saitama (JP)**
 • **Suda, Hiroyuki,
c/o Pioneer Electronic Corporation
Ohaza Yamada, Kawagoe-shi, Saitama (JP)**

(74) Representative:
**Luckhurst, Anthony Henry William et al
MARKS & CLERK,
57-60 Lincoln's Inn Fields
London WC2A 3LS (GB)**

(56) References cited:
**EP-A- 0 699 894        US-A- 4 899 285
US-A- 5 424 953**

EP 0 875 731 B1

**Description**

The present invention relates to a navigation apparatus of a hybrid navigation type which utilizes output data of a self-contained sensor and a GPS (Global Positioning System) unit to derive navigational data for a moving body.

There is a navigation apparatus known which stores map data including road data, produced by digitizing respective points on roads drawn on maps, in a storage medium such as a CD-ROM, detects a current position and a travelling direction of a vehicle using a variety of sensors, and retrieves a group of map data on a region within a predetermined range including the current position from the storage medium to display the map data on a display as a map around the current position of the vehicle and to automatically display the current position and the travelling direction of the vehicle on the map.

In the conventional navigation apparatus, there are a self-contained navigation scheme and a GPS navigation scheme. The self-contained navigation scheme uses a self-contained sensor which does not rely on any informational support from the outside such as an acceleration sensor and an angular velocity sensor provided in the body of the apparatus for measuring navigational parameters such as an acceleration and angular velocity of a vehicle. The GPS navigation scheme uses a GPS apparatus for receiving positioning-related data transmitted from a plurality of artificial satellites. Since the self-contained navigation scheme and the GPS navigation scheme respectively have advantages and disadvantages, a hybrid navigation scheme, which compares respective measured data obtained by these navigation schemes and uses the proper data, is generally employed.

However, since the GPS apparatus requires a relatively long operation time (for example, 500 ms) for calculation processing up to outputting navigational data of a vehicle such as longitude, latitude, and direction based on received data from a plurality of artificial satellites, there is a significant temporal difference between the time that GPS apparatus supplies output data and the time that the positioning was performed.

On the other hand, the self-contained navigation scheme using a self-contained sensor hardly has a temporal difference between the positioning time and the sensor outputting time.

Thus, the hybrid navigation scheme performs an operation for correcting output data of a self-contained sensor such that a travelling velocity of a vehicle derived as navigational data from output data of the self-contained sensor is equal to a travelling velocity of the vehicle derived from output data of a GPS apparatus, so that appropriate navigational data such as the travelling velocity cannot be derived from the correcting operation unless the output data of the self-contained sensor and the output data of the GPS apparatus are taken at the same positioning time. To cope with this problem, a conventional hybrid navigation apparatus must absorb a time difference in positioning time between the self-contained sensor and the GPS apparatus. This implies, however, a problem in that relatively complicated calculation processing must be executed by processing means such as a CPU, for example, in consideration of the stability of the vehicle such as in a constant velocity driving condition of the vehicle.

In EP-A-699894, a GPS unit calculates navigational data such as speed and heading. Pulse counts form an on-board distance sensor are acquired at the same time as the GPS signals are received and a distance correction coefficient may then be calculated.

It is therefore an object of the present invention to provide a navigation apparatus of hybrid navigation type which is capable of deriving highly accurate navigational data from respective output data of a self-contained sensor and a GPS unit without requiring calculation processing for absorbing a time difference therebetween.

The navigation apparatus according to the present invention is characterized by a self-contained sensor for detecting navigational parameters of the moving body as data without relying on any informational support from the outside, a GPS unit for receiving positioning-related data transmitted from a plurality of artificial satellites at a position of the moving body and outputting the received data, and processing means for accepting output data of the self-contained sensor and the received data at the same positioning time to calculate navigational data based on the accepted output data of the self-contained sensor and the received data at the same positioning time.

      Fig. 1 is a block diagram illustrating an embodiment of the present invention;
      Fig. 2 is a block diagram illustrating the configuration of a GPS unit;
      Fig. 3 is a flow chart illustrating a procedure for calculating a travelling direction;
      Fig. 4 is a flow chart illustrating a procedure for calculating a running distance per one pulse of a distance sensor; and
      Fig. 5 is a flow chart illustrating a procedure for a gain correcting calculation for an acceleration sensor.

An embodiment of the present invention will hereinafter be described in detail with reference to the accompanying drawings.

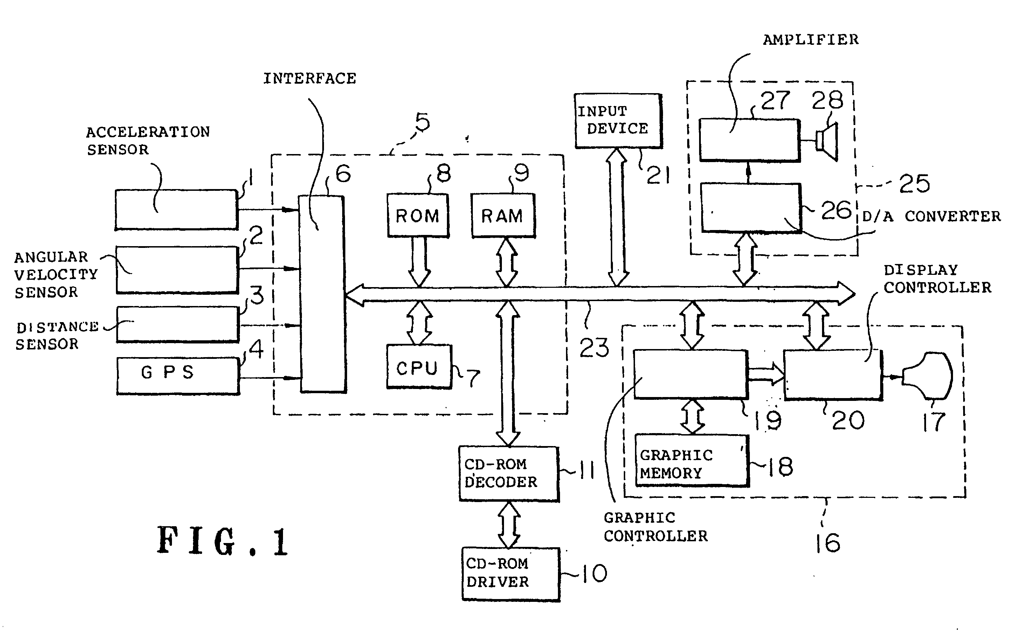

Fig. 1 illustrates a vehicle-mounted navigation apparatus according to the present invention. The vehicle-mounted navigation apparatus comprises an acceleration sensor 1, an angular velocity sensor 2, a distance sensor 3 and a GPS unit 4 as sensors for measuring navigation-related parameters of a vehicle. The acceleration sensor 1 detects an acceleration of the vehicle, the angular velocity sensor 2 includes a vibrating gyro for detecting an angular velocity of the vehicle, the distance sensor 3 is provided for detecting a running distance of the vehicle, and the GPS unit 4 receives signals indicative of positioning-related data from a plurality of artificial satellites for use in the detection of an absolute position of the vehicle from latitude and longitudinal information and so on. The configuration of the GPS unit 4 will be later described. Detection outputs of the respective sensors (units) are supplied to a system controller 5. The acceleration sensor 1 may comprise a piezoelectric device, by way of example. The distance sensor 3 in turn comprises a pulse generator for generating a pulse signal for every rotation of a drive shaft (not shown) of the vehicle over a predetermined angle. The pulse generator is a known one which magnetically or optically detects a rotating angular position of the drive shaft to generate a pulse signal.

The system controller 5 comprises an interface 6 which receives detection outputs of the respective sensors (units) 1-4 for performing operations such as A/D (analog-to-digital) conversion; a CPU (Central Processing Unit) 7 for performing a variety of image data processing as well as performing high speed operations for deriving a travelling direction, a running distance, a running direction, the coordinates of a current position (longitude, latitude) and so on of the vehicle based on output data of the respective sensors (units) 1 to 4 sequentially transferred thereto from the interface 6; a ROM (Read Only Memory) 8 having previously written therein a variety of processing programs for the CPU 7 and other necessary information; and a RAM (Random Access Memory) 9 for writing and reading information required for executing the programs. Preferably, the RAM 9 may be backed up so as to prevent data such as logical values, later described, from missing by supplying a stabilized voltage from an output voltage generated by a battery (not shown), even when the navigation apparatus is powered off. The interface 6 is provided with a counter (not shown) for counting output pulse signals from the distance sensor 3.

An external storage medium, CD-ROM, for example, may be utilized as a read-only non-volatile storage medium. It should be noted, however, that the external storage medium is not limited to the CD-ROM, but any other non-volatile storage media may be used such as DVD-ROM, DAT, and IC card. On the CD-ROM, there have been previously stored longitude and latitude data indicative of a range of each road unit and data on connection relations between respective road units as road information, and pattern data for displaying positions, in addition to map data derived by digitizing respective points on roads of maps. The CD-ROM is driven by a CD-ROM driver 10 for retrieving information stored therein. An output retrieved by the CD-ROM driver 10 is decoded by a CD-ROM decoder 11 and then supplied to a bus line 23.

When the vehicle is running, the CPU 7 derives a travelling direction, acceleration, vehicle velocity, running distance and direction of the vehicle based on output data of the acceleration sensor 1, angular velocity sensor 2, distance sensor 3 and GPS unit 4 at predetermined time intervals by timer interruption, and calculates longitude and latitude data indicative of coordinate data of a current position of the vehicle. Then, the CPU 7 collects map data on a region within a predetermined range including the coordinates of the current position from the CD-ROM, and temporarily stores the collected map data in the RAM 9 as well as supplies it to a display unit 16.

The display unit 16 comprises a display 17 such as CRT; a graphic memory 18 composed of V-RAM (video RAM) or the like; a graphic controller 19 for drawing map data sent thereto from the system controller 5 as image data in the graphic memory 18 and outputting the image data; and a display controller 20 for controlling to display a map on the display 17 based on the image data output from the graphic controller 19. An input device 21, which comprises a keyboard or the like, issues a variety of instructions or the like to the system controller 5 in response to key manipulations by the user.

A sound reproducing unit 25 comprises a D/A converter 26 for digital-to-analog converting audio digital data sent from the CD-ROM driver 10 or the RAM 9 through the bus line 23; an amplifier 27 for amplifying an audio analog signal output from the D/A converter 26; and a speaker 28 for acoustically outputting an amplified audio analog signal.

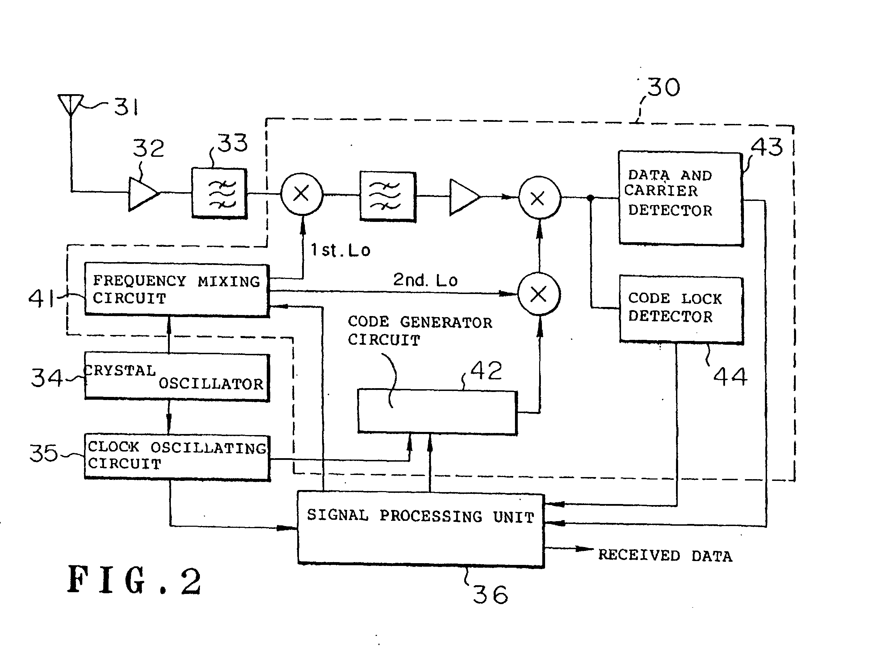

The GPS unit 4 has a configuration as illustrated in Fig. 2. Specifically, the GPS unit 4 comprises an antenna unit including a GPS antenna 31, a preamplifier 32 and a bandpass filter 33; a GPS receiver 30 connected to the antenna unit through a cable, not shown; a crystal oscillator 34 for outputting a reference frequency signal serving as a timing control signal for the entire GPS unit 4; a clock oscillating circuit 35 for generating a clock signal based on the reference frequency signal; and a signal processing unit 36.

The GPS receiver 30 comprises a frequency mixing circuit 41 for creating, based on the reference frequency signal, signals having the same patterns as data related to a signal carrier of each GPS satellite, and data related to the position of the GPS satellite and a condition of a clock in the GPS satellite; a code generator circuit 42 for generating and outputting a code signal having the same pattern as a distance measuring signal from the GPS satellite based on the clock signal; a data and carrier detector 43 for correlation-detecting data on the clock within the GPS satellite and the GPS satellite, and the carrier based on output signals of the frequency mixing circuit 41 and the code generator circuit 42; and a code lock detector 44 for correlation-detecting the distance measuring signal by the code signal. The signal processing unit 36 controls the code generator circuit 42 using the clock signal as an operation timing, and outputs the distance signal and the clock data detected for each GPS satellite from the code generator circuit 42, the data and carrier detector 43, and the code lock detector 44 to the interface 6 as received data. The GPS unit 4, unlike conventional GPS apparatus, does not have a processing unit for calculating positional data such as latitude, longitude and direction from received data.

When the CPU 7 processes running information, which requires calculations, such as travelling direction and running distance of the vehicle, the CPU 7 uses self-contained data and received data at the same positioning time, in the self-contained calculation processing using respective self-contained data detected and outputted by the acceleration sensor 1, the angular velocity sensor 2, and the distance sensor 3, all of which function as self-contained sensors, and in the GPS calculation processing using output data of the GPS unit 4, as described in the following examples.

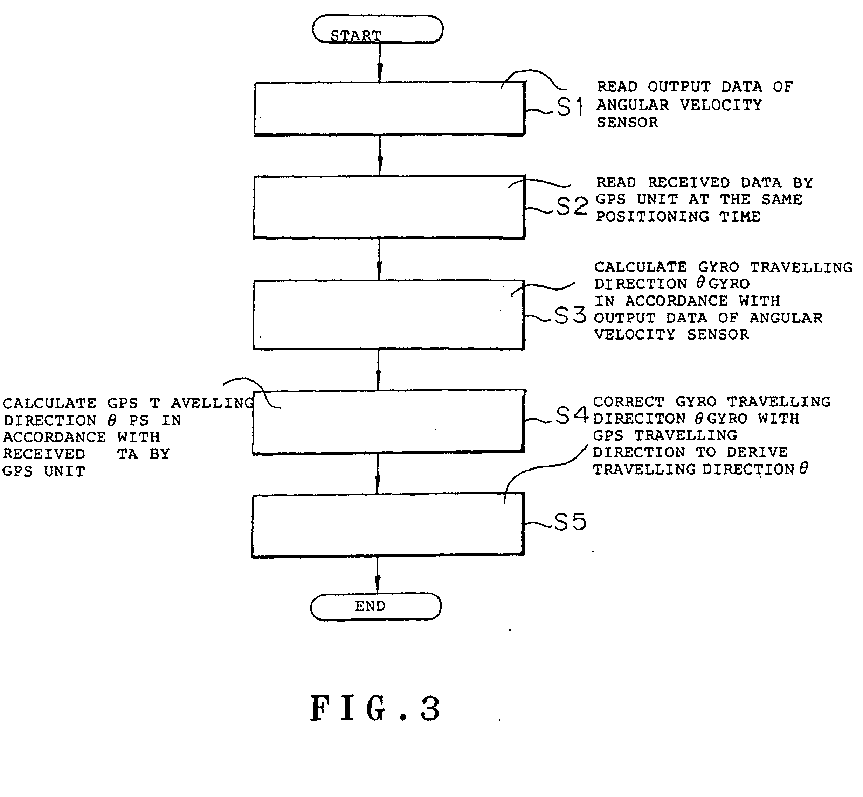

For calculating a travelling direction, as illustrated in Fig. 3, the CPU 7 reads output data of the angular velocity sensor 2 from the interface 6 in synchronism with the clock signal governing the operation timing generated from a clock generator, not shown, within the system controller 5 (step S1), and reads from the interface 6 received data from the GPS unit 4 at the same time as the positioning time at which the read output data of the angular velocity sensor 2 was measured (step S2). Then, the CPU 7 calculates a travelling direction (hereinafter referred to as the "gyro travelling direction") $\theta_{GYRO}$ in accordance with the read output data of the angular velocity data 2 (step S3), and calculates a travelling direction (hereinafter referred to as the "GPS travelling direction") $\theta_{GPS}$ in accordance with the read received data by the GPS unit 4 (step S4). A method of calculating the gyro travelling direction $\theta_{GYRO}$ is shown, for example, in US-A-5 424 953. Since the respective calculated travelling directions $\theta_{GYRO}$ and $\theta_{GPS}$ have errors, the CPU 7 next corrects the gyro travelling direction $\theta_{GYRO}$ with the GPS travelling direction $\theta_{GPS}$ to derive a travelling direction $\theta$ (step S5). This correction is made by the following equation (1):

$$\theta = \theta_{GYRO} - 1/2(\theta_{GYRO} - \theta_{GPS}) \qquad (1)$$

The calculation of the travelling direction $\theta$ is performed for each time the gyro travelling direction $\theta_{GYRO}$ and the GPS travelling direction $\theta_{GPS}$ are calculated at steps S3, S4, respectively, in accordance with output data of the angular velocity sensor 2 and received data by the GPS unit 4 at the same positioning time. In other words, the calculation of the travelling direction $\theta$ is executed at step S3 without confirming that each of the calculated gyro travelling direction $\theta_{GYRO}$ and GPS travelling direction $\theta_{GPS}$ has been stable values for a predetermined time period. This is possible because the gyro travelling direction $\theta_{GYRO}$ and the GPS travelling

direction $\theta_{GPS}$ are calculated respectively using detection data captured by the angular velocity sensor 2 and the GPS unit 4 at the same time.

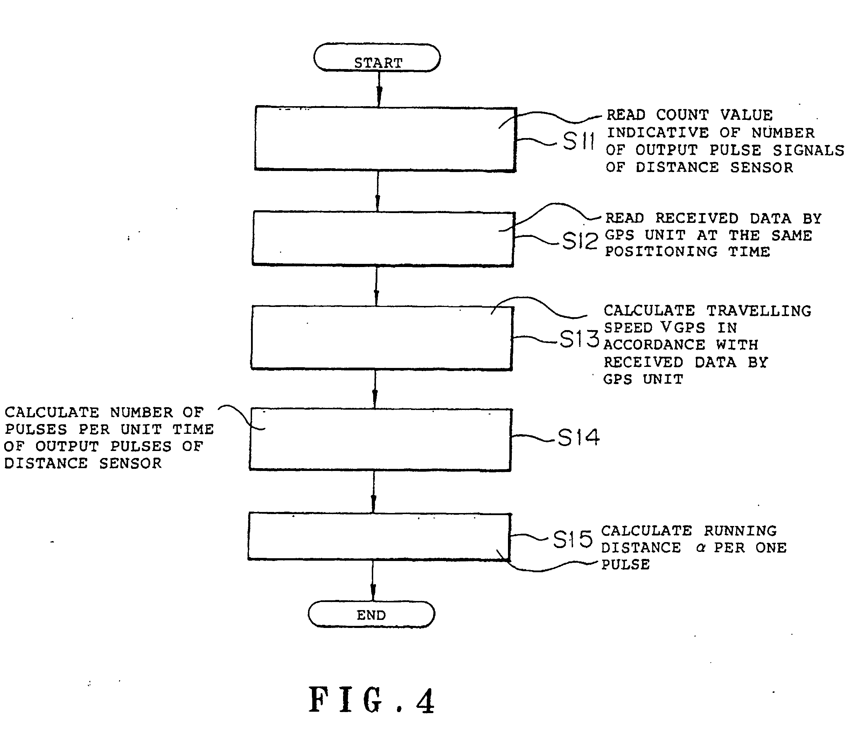

Next, for calculating a running distance per one pulse (from a leading edge of a pulse to a leading edge of the next pulse) of the output pulse signal of the distance sensor 3, as illustrated in Fig. 4, the CPU 7 reads from the interface 6 a count value generated by the counter for counting pulse signals, which are output data of the distance sensor 3 in synchronism with the clock signal governing the operation timing within the system controller 5 (step S11), and reads from the interface 6 received data of the GPS unit 4 at the same time as the positioning time at which the read output data of the distance sensor 3 was measured (step S12). Then, the CPU 7 calculates a travelling velocity $V_{GPS}$ in accordance with the output data of the GPS unit 4 (step S13). In addition, the CPU 7 calculates the number of pulse P per unit time from the counted value indicative of the number of output pulse signals from the distance sensor 3 (step S14). With the travelling velocity $V_{GPS}$ and the number of pulses P thus calculated, the CPU 7 calculates a running distance $\alpha$ per one pulse of the distance sensor 3 in accordance with the travelling velocity $V_{GPS}$ and the number of pulses P (step S15). The running distance $\alpha$ is calculated by the following equation (2):

$$\alpha = K \cdot V_{GPS}/P \qquad (2)$$

where K is a coefficient for converting units.

The running distance $\alpha$ per one pulse is calculated because the running distance $\alpha$ per one pulse may vary depending on a vehicle, so that a correct running distance $\alpha$ per one pulse need be calculated. By multiplying the running distance $\alpha$ per one pulse thus calculated by the number of output pulses of the distance sensor 3, a running distance of the vehicle can be derived. Further, the calculation of the running distance $\alpha$ per one pulse is performed using the equation (2) such that the velocity of the vehicle calculated from the output pulses of the distance sensor 3 is equal to the travelling velocity $V_{GPS}$ derived in accordance with the output data of the GPS unit 4.

As described above, the calculation of the running distance a per one pulse is performed for each time the travelling velocity $V_{GPS}$ and the number of pulses P are calculated at steps S13 and S14, respectively, in accordance with the output data of the GPS unit 4 and the output pulses of the distance sensor 3. In other words, the calculation of the running distance a is executed at step S15 without confirming that the travelling velocity $V_{GPS}$ calculated from the output data of the GPS unit 4 falls within a predetermined deviation successively a predetermined plurality of number of times and that the number of pulses P falls within a predetermined range successively the predetermined plurality of number of times. This is possible because the travelling velocity $V_{GPS}$ and the number of pulses P are calculated respectively using detection data captured by the GPS unit 4 and the distance sensor 3 at the same positioning time.

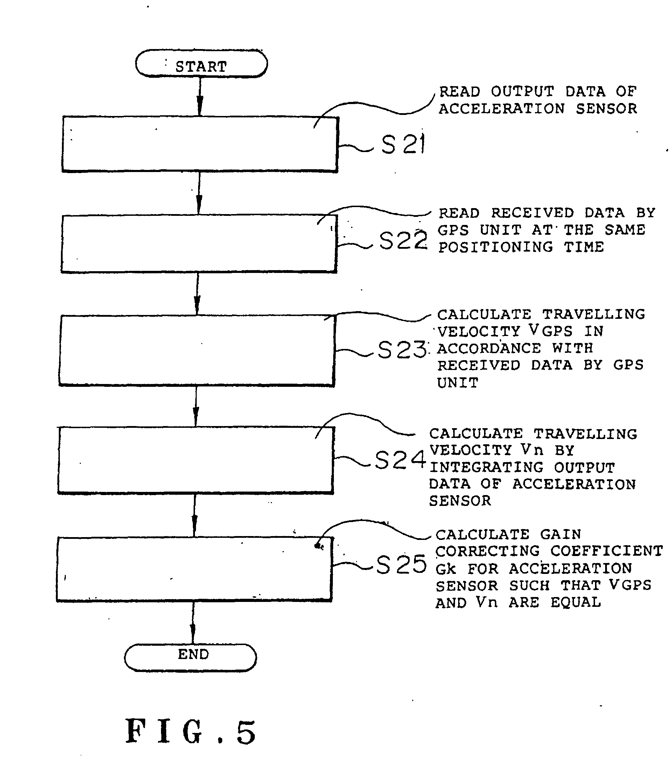

Next, for correcting the acceleration sensor 1 in terms of gain, as illustrated in Fig. 5, the CPU 7 reads from the interface 6 output data of the acceleration sensor 1 in synchronism with the clock signal governing the operation timing within the system controller 5 (step S21), and reads from the interface 6 received data of the GPS unit 4 at the same time as the positioning time at which the read output data of the acceleration sensor 1 was measured (step S22). Then, the CPU 7 calculates the travelling velocity $V_{GPS}$ in accordance with the read output data of the GPS unit 4 (step S23). In addition, the CPU 7 calculates a travelling velocity $V_n$ by integrating the output data of the read acceleration sensor 1 (step S24). A method of calculating this travelling velocity $V_n$ will be described later. The CPU 7 calculates a gain correcting coefficient Gk (initial value is one) for the acceleration sensor 1 such that the calculated travelling velocities $V_{GPS}$ and $V_n$ are equal (step S25).

Since an offset value $a_{oe}$ is previously set at the output of the accelerator 1, the offset value $a_{oe}$ is subtracted from a sampling value $a_n$ from the output of the acceleration sensor 1, and the difference $(a_n-a_{oe})$ is multiplied by a predetermined gain G [m/s²] and the gain correcting coefficient Gk to derive an acceleration $A_n$ [m/s²] of the vehicle at the sampling time. An equation for calculating this acceleration is shown in the following equation (3):

$$A_n = Gk \cdot G \cdot (a_n-a_{oe}) \qquad (3)$$

Assuming that a running condition of the vehicle during a sampling period T is a uniform acceleration linear motion, a velocity changing amount $\Delta V_n$ [km/s] of the vehicle at a sampling time $T_n$ is given by:

$$\Delta V_n = (3600/1000) \cdot A_n \cdot T \qquad (4)$$

where (3600/1000) is a coefficient for converting the units from seconds [s] to hours [h] and from meters [m] to kilometers [km].

A velocity $V_n$ [km/h] of the vehicle at the sampling time $T_n$ is calculated from a velocity $V_{n-1}$ at the previous sampling time $T_{n-1}$ and the velocity changing amount $\Delta V_n$ of the vehicle at the sampling time $T_n$ as expressed by the following equation (5):

$$V_n = \Delta V_n + V_{n-1} \qquad (5)$$

At step S25, a travelling velocity (GPS velocity) $V_{GPS}$ derived from the output data of the GPS unit 4 is compared with the velocity (self-contained sensor velocity) $V_n$ derived from the output data of the acceleration sensor 1. The gain correcting coefficient Gk is increased by a predetermined value if $V_{GPS}>V_n$, while the gain correcting coefficient Gk is decreased by a predetermined value if $V_{GPS}<V_n$. Also, if $V_{GPS}=V_n$, the gain correcting coefficient Gk at that time is maintained.

The gain correction for the acceleration sensor 1 is performed for each time the GPS velocity $V_{GPS}$ and the self-contained sensor velocity $V_n$ are calculated in accordance with the output data of the GPS unit 4 and the acceleration sensor 1, respectively, at steps S23, S24. In other words, the comparison at the step S25 is executed without confirming that the calculated GPS velocity $V_{GPS}$ and the self-contained sensor velocity $V_n$ have been stable values for a predetermined time period. This is possible because the GPS velocity $V_{GPS}$ and the self-contained sensor velocity $V_n$ are calculated using the detection data captured at the same positioning time by the GPS unit 4 and the acceleration sensor 1, respectively.

Without limiting to the foregoing embodiment, the gain of the angular velocity sensor 2 may be corrected, for example, for calculating navigational data based on output data of the self-contained sensor and the received data from the GPS unit at the same positioning time. In this case, the CPU 7 reads output data of the angular velocity sensor 2 from the interface 6 in synchronism with the clock signal governing the operation timing within the system controller 5, and reads from the interface 6 received data from the GPS unit 4 at the same time as the positioning time at which the output data of the angular velocity sensor 2 was measured. Then, the CPU 7 calculates a gyro travelling direction $\theta_{GYRO}$ in accordance with the output data of the angular velocity sensor 2, and calculates the GPS travelling direction $\theta_{GPS}$ in accordance with the output data from the GPS unit 4, compares the respective travelling directions $\theta_{GYRO}$ and $\theta_{GPS}$, and increases or decreases the gain correcting coefficient related to the calculation of the gyro travelling direction $\theta_{GYRO}$ in accordance with the comparison result.

Also, while in the foregoing embodiment, the GPS unit 4 has the entire configuration illustrated in Fig. 2, the GPS unit 4 may be configured to output signals on input lines to the data and carrier detector 43 and the code lock detector 44 such that subsequent signal processing is all performed in the system controller 5.

Further, while the foregoing embodiment has been described in connection with the navigation apparatus mounted in a vehicle, the present invention may also be applied when the navigation apparatus is mounted in any other moving body.

As described above, since the navigation apparatus according to the present invention eliminates the need for the processing for absorbing a time difference due to a difference in positioning time between the self-contained sensor and the GPS unit, highly accurate navigational data can be derived from respective output data of the self-contained sensor and the GPS unit.

## Claims

1. A navigation apparatus for calculating navigational data for a moving body comprising:

   a self-contained sensor (1,2,3) for detecting navigational parameters of said moving body as data without relying on any informational support from the outside;
   a GPS unit (4) for receiving positioning-related data transmitted from a plurality of artificial satellites at a position of said moving body and outputting the received data; and
   processing means (7) for accepting output data of said self-contained sensor (1,2,3) and said received data at the same positioning time (51,52;511,512;521;522) to calculate navigational data based on said accepted output data of said self-contained sensor (1,2,3) and said received data at the same positioning time,

   wherein said GPS unit (4) does not include a processing unit for processing received data to calculate navigational data such as lattitude, longitude and direction from the received data and said GPS unit (4) outputs said received data without such processing to said processing means (7).

2. A navigation apparatus according to claim 1, wherein said processing means (7) includes first navigational data processing means for calculating first navigational data ($\theta_{GYR0}$, P, $V_n$) based on said output data of said self-contained sensor, and second navigational data processing means for calculating second navigational data ($\theta_{GPS}$, $V_{GPS}$) based on said received data, and said processing means outputs said first and second navigational data in synchronism with each other.

3. A navigation apparatus according to claim 2, wherein said first navigational data derived by said first navigational data processing means is corrected with said second navigational data derived by said second navigational data processing means.

4. A navigation apparatus according to claim 2, wherein said first and second navigational data processing means comprise the same CPU (central processing unit) (7).

5. A navigation apparatus according to claim 2, wherein:

   said self-contained sensor includes an angular velocity sensor (2) for detecting an angular velocity as a navigational parameter for said moving body;
   said first navigational data ($\theta_{GYR0}$) derived by said first navigational data processing means and said second navigational data ($\theta_{GPS}$) derived by said second navigational data processing means both indicate a travelling direction ($\theta$) of said moving body; and
   said processing means (7) includes correcting means for correcting the travelling direction ($\theta_{GYR0}$) derived by said first navigational data processing means with the travelling direction ($\theta_{GPS}$) derived by said second navigational data processing means.

6. A navigation apparatus according to claim 2, wherein:

   said self-contained sensor includes a distance sensor (3) for generating a pulse signal (P) at intervals of a predetermined running distance as a navigational parameter for said moving body; and
   said processing means (7) calculates a running distance ($\alpha$) per one pulse of said pulse signal (P) based on said pulse signal from said first navigational data derived by said first navigational data processing means and said second navigational data ($V_{GPS}$) derived by said second navigational data processing means.

7. A navigation apparatus according to claim 2, wherein said processing means corrects a gain of said self-contained sensor based on said first navigational data derived by said first navigational data processing means and said second navigational data derived by said second navigational data processing means.

8. A navigation apparatus according to claim 7, wherein said self-contained sensor includes an acceleration sensor (1) for detecting an acceleration as a navigational parameter for said moving body.

9. A method of calculating navigational data for a moving body, the method comprising:

   detecting navigational parameters of said moving body as data by means of a self-contained sensor (1, 2, 3) on said body without relying on any informational support from the outside and outputting said data;
   receiving positioning-related data transmitted from a plurality of artificial satellites at a position of said moving body by means of a GPS unit (4) and outputting said received data without processing said data in said GPS unit to calculate navigational data such as lattitude, longitude and direction,

processing means (7) for accepting the output data of said self-contained sensor (1,2,3) and said received data of said GPS unit (1, 2, 3) at the same positioning time (51,52;511,512;521; 522) to calculate navigational data based on said accepted output data of said self-contained sensor (1,2,3) and said received data at the same positioning time.

**Patentansprüche**

1. Navigationsvorrichtung zum Berechnen von Navigationsdaten für einen sich bewegenden Körper, umfassend:

   einen separaten Sensor (1, 2, 3) zum Erfassen von Navigationsparametern des sich bewegenden Körpers als Daten, ohne sich auf irgendeine Informationsunterstützung von außen zu stützen;

   eine GPS Einheit (4) zum Empfangen von Positionierungs-bezogenen Daten von einer Vielzahl von künstlichen Satelliten an einer Position des sich bewegenden Körpers und zum Ausgeben der empfangenen Daten; und

   eine Verarbeitungseinrichtung (7) zum Annehmen von Ausgangsdaten des separaten Sensors (1, 2, 3) und der empfangenen Daten zu der gleichen Positionierungszeit (51, 52; 511, 512; 521; 522), um Navigationsdaten auf Grundlage der angenommenen Ausgangsdaten des separaten Sensors (1, 2, 3) und der empfangenen Daten zu der gleichen Positionierungszeit zu berechnen;

   wobei die GPS Einheit (4) eine Verarbeitungseinheit zum Verarbeiten von empfangenen Daten, um Navigationsdaten wie die Breite, die Länge und die Richtung aus den empfangenen Daten zu berechnen, nicht einschließt und die GPS Einheit (4) die empfangenen Daten ohne eine derartige Verarbeitung an die Verarbeitungseinrichtung (7) ausgibt.

2. Nayigationsvorrichtung nach Anspruch 1, wobei die Verarbeitungseinrichtung (7) eine erste Navigationsdaten-Verarbeitungseinrichtung zum Berechnen von ersten Navigationsdaten ($\theta_{GYRO}$, P, Vn) auf Grundlage der Ausgangsdaten des separaten Sensors, und eine zweite Navigationsdaten-Verarbeitungseinrichtung zum Berechnen von zweiten Navigationsdaten ($\theta_{GPS}$, $V_{GPS}$) auf Grundlage der empfangenen Daten einschließt, und die Verarbeitungseinrichtung die ersten und zweiten Navigationsdaten synchron zueinander ausgibt.

3. Navigationsvorrichtung nach Anspruch 2, wobei die ersten Navigationsdaten, die von der ersten Navigationsdaten-Verarbeitungseinrichtung abgeleitet werden, mit dem zweiten Navigationsdaten, die von der zweiten Navigationsdaten-Verarbeitungseinrichtung abgeleitet werden, korrigiert werden.

4. Navigationsvorrichtung nach Anspruch 2, wobei die erste und die zweite Navigationsdaten-Verarbeitungseinrichtung die gleiche CPU (Zentralverarbeitungseinheit) (7) umfassen.

5. Navigationsvorrichtung nach Anspruch 2, wobei:

   der separate Sensor einen eigenen Winkelgeschwindigkeitssensor (2) zum Erfassen einer Winkelgeschwindigkeit als einen Navigationsparameter für den sich bewegenden Körper einschließt;

   die ersten Navigationsdaten ($\theta_{GYRO}$), die von der ersten Navigationsdaten-Verarbeitungseinrichtung abgeleitet werden, und die zweiten Navigationsdaten ($\theta_{GPS}$), die von der zweiten Navigationsdaten-Verarbeitungseinrichtung abgeleitet werden, beide eine Bewegungsrichtung ($\theta$) des sich bewegenden Körpers anzeigen; und

   die Verarbeitungseinrichtung (7) eine Korrektureinrichtung zum Korrigieren der Bewegungsrichtung ($\theta_{GYRO}$), die von der ersten Navigationsdaten-Verarbeitungseinrichtung abgeleitet wird, rnit der Bewegungsrichtung ($\theta_{GPS}$), die von der zweiten Navigationsdaten-Verarbeitungseinrichtung abgeleitet wird, einschließt.

6. Navigationsvorrichtung nach Anspruch 2, wobei:

   der separate Sensor einen Abstandssensor (3) zum Erzeugen eines Impulssignals (P) bei Intervallen eines vorgegebenen laufenden Abstands als einen Navigationsparameter für den sich bewegenden Körper einschließt; und

   die Verarbeitungseinrichtung (7) einen laufenden Abstand ($\alpha$) pro einem Impuls des Impulssignals (P) auf Grundlage des Impulssignals von den ersten Navigationsdaten, die von der ersten Navigationsdaten-Verarbeitungseinrichtung abgeleitet werden, und den zweiten Navigationsdaten ($V_{GPS}$), die von der zweiten Navigationsdaten-Verarbeitungseinrichtung abgeleitet werden, berechnet.

**7.** Navigationsvorrichtung nach Anspruch 2, wobei die Verarbeitungseinrichtung eine Verstärkung des separaten Sensors auf Grundlage der Navigationsdaten, die von der ersten Navigationsdaten-Verarbeitungseinrichtung abgeleitet werden, und der zweiten Navigationsdaten, die von der zweiten Navigationsdaten-Verarbeitungseinrichtung abgeleitet werden, korrigiert.

**8.** Navigationsvorrichtung nach Anspruch 7, wobei der separate Sensor einen Beschleunigungssensor (1) zum Erfassen einer Beschleunigung als einen Navigationsparameter für den sich bewegenden Körper einschließt.

**9.** Verfahren zum Berechnen von Navigationsdaten für einen sich bewegenden Körper, wobei das Verfahren die folgenden Schritte umfasst:

Erfassen von Navigationsparametern des sich bewegenden Körpers als Daten mittels eines separaten Sensors (1, 2, 3) auf dem Körper, ohne sich auf irgendeine Informationsunterstützung von außen zu stützen, und Ausgeben der Daten;

Empfangen von Positionierungs-bezogenen Daten, die von einer Vielzahl von künstlichen Satelliten übertragen werden, an einer Position des sich bewegenden Körpers mittels einer GPS Einheit (4) und Ausgeben der empfangenen Daten ohne eine Verarbeitung der Daten in der GPS Einheit, um Navigationsdaten wie die Breite, die Länge und die Richtung zu berechnen; und

eine Verarbeitungseinrichtung (7) zum Annehmen der Ausgangsdaten des separaten Sensors (1, 2, 3) und der empfangenen Daten der GPS Einheit (1, 2, 3) zu der gleichen Positionierungszeit (51, 52; 511, 512; 521, 522), um Navigationsdaten auf Grundlage der angenommenen Daten der separaten Sensors (1, 2, 3) und der empfangenen Daten zu der gleichen Positionierungszeit zu berechnen.

**Revendications**

**1.** Appareil de navigation pour calculer des données de navigation pour un corps mobile comprenant:

un capteur auto-contenu (1, 2, 3) pour détecter des paramètres de navigation dudit corps mobile en tant que données sans se reposer sur un quelconque support d'information provenant de l'extérieur;

une unité GPS (4) pour recevoir des données rapportées au positionnement qui sont émises depuis une pluralité de satellites artificiels pour une position dudit corps mobile et pour émettre en sortie les données reçues; et

un moyen de traitement (7) pour accepter des données de sortie dudit capteur auto-contenu (1, 2, 3) et lesdites données reçues au même temps de positionnement (51, 52; 511, 512; 521, 522) afin de calculer des données de navigation sur la base desdites données de sortie acceptées dudit capteur auto-contenu (1, 2, 3) et desdites données reçues au même temps de positionnement,

dans lequel ladite unité GPS (4) n'inclut pas une unité de traitement pour traiter des données reçues afin de calculer des données de navigation telles que la latitude, la longitude et la direction à partir des données reçues et ladite unité GPS (4) émet en sortie lesdites données reçues sans ce traitement sur ledit moyen de traitement (7).

**2.** Appareil de navigation selon la revendication 1, dans lequel ledit moyen de traitement (7) inclut un premier moyen de traitement de données de navigation pour calculer des premières données de navigation ($\theta_{GYRO}$, P, $V_n$) sur la base desdites données de sortie dudit capteur auto-contenu, et un second moyen de traitement de données de navigation pour calculer des secondes données de navigation ($\theta_{GPS}$, $V_{GPS}$) sur la base desdites données reçues, et ledit moyen de traitement émet en sortie lesdites premières et secondes données de navigation en synchronisation les unes avec les autres.

**3.** Appareil de navigation selon la revendication 2, dans lequel lesdites premières données de navigation qui sont dérivées par ledit premier moyen de traitement de données de navigation sont corrigées à l'aide desdites secondes données de navigation qui sont dérivées par ledit second moyen de traitement de données de navigation.

**4.** Appareil de navigation selon la revendication 2, dans lequel lesdits premier et second moyens de traitement de données de navigation comprennent la même CPU (unité centrale de traitement) (7).

**5.** Appareil de navigation selon la revendication 2, dans lequel:

ledit capteur auto-contenu inclut un capteur de vitesse angulaire (2) pour détecter une vitesse angulaire en tant que paramètre de navigation pour ledit corps mobile;

lesdites premières données de navigation ($\theta_{GYRO}$) qui sont dérivées par ledit premier moyen de traitement de données de navigation et lesdites secondes données de navigation ($\theta_{GPS}$) qui sont dérivées par ledit second moyen de traitement de données de navigation indiquent toutes deux une direction de déplacement ($\theta$) dudit corps mobile; et

ledit moyen de traitement (7) inclut un moyen de correction pour corriger la direction de déplacement ($\theta_{GYRO}$) qui est dérivée par ledit premier moyen de traitement de données de navigation à l'aide de la direction de déplacement ($\theta_{GPS}$) qui est dérivée par ledit second moyen de traitement de données de navigation.

6. Appareil de navigation selon la revendication 2, dans lequel:

ledit capteur auto-contenu inclut un capteur de distance (3) pour générer un signal impulsionnel (P) selon des intervalles d'une distance de parcours prédéterminée en tant que paramètre de navigation pour ledit corps mobile; et

ledit moyen de traitement (7) calcule une distance de parcours ($\alpha$) par impulsion dudit signal impulsionnel (P) sur la base dudit signal impulsionnel à partir desdites premières données de navigation qui sont dérivées par ledit premier moyen de traitement de données de navigation et à partir desdites secondes données de navigation ($V_{GPS}$) qui sont dérivées par ledit second moyen de traitement de données de navigation.

7. Appareil de navigation selon la revendication 2, dans lequel ledit moyen de traitement corrige un gain dudit capteur auto-contenu sur la base desdites premières données de navigation qui sont dérivées par ledit premier moyen de traitement de données de navigation et desdites secondes données de navigation qui sont dérivées par ledit second moyen de traitement de données de navigation.

8. Appareil de navigation selon la revendication 7, dans lequel ledit capteur auto-contenu inclut un capteur d'accélération (1) pour détecter une accélération en tant que paramètre de navigation pour ledit corps mobile.

9. Procédé de calcul de données de navigation pour un corps mobile, le procédé comprenant:

la détection de paramètres de navigation dudit corps mobile en tant que données au moyen d'un capteur auto-contenu (1, 2, 3) sur ledit corps sans se reposer sur un quelconque support d'information provenant de l'extérieur et l'émission en sortie desdites données;

la réception de données rapportées au positionnement qui sont émises depuis une pluralité de satellites artificiels pour une position dudit corps mobile au moyen d'une unité GPS (4) et l'émission en sortie desdites données reçues sans traitement desdites données dans ladite unité GPS afin de calculer des données de navigation telles que la latitude, la longitude et la direction; et

un moyen de traitement (7) pour accepter les données de sortie dudit capteur auto-contenu (1, 2, 3) et lesdites données reçues de ladite unité GPS (1, 2, 3) au même temps de positionnement (51, 52; 511, 512; 521, 522) afin de calculer des données de navigation sur la base desdites données de sortie acceptées dudit capteur auto-contenu (1, 2, 3) et desdites données reçues au même temps de positionnement.

FIG. 1

ACCELERATION SENSOR — 1
ANGULAR VELOCITY SENSOR — 2
DISTANCE SENSOR — 3
GPS — 4
INTERFACE — 6
ROM — 8
RAM — 9
CPU — 7
CD-ROM DECODER — 11
CD-ROM DRIVER — 10
INPUT DEVICE — 21
AMPLIFIER — 25
D/A CONVERTER — 26
27 28
DISPLAY CONTROLLER — 20
GRAPHIC CONTROLLER — 19
GRAPHIC MEMORY — 18
17
16
23
5

FIG.2

EP 0 875 731 B1

START

READ OUTPUT DATA OF
S1 ANGULAR VELOCITY
SENSOR

READ RECEIVED DATA BY
S2 GPS UNIT AT THE SAME
POSITIONING TIME

CALCULATE GYRO TRAVELLING
DIRECTION $\theta$ GYRO
IN ACCORDANCE WITH
S3 OUTPUT DATA OF ANGULAR
VELOCITY SENSOR

CALCULATE GPS T AVELLING
DIRECTION $\theta$ PS IN
ACCORDANCE WITH
RECEIVED    TA BY
GPS UNIT

CORRECT GYRO TRAVELLING
S4 DIRECITON $\theta$ GYRO WITH
GPS TRAVELLING
DIRECTION TO DERIVE
TRAVELLING DIRECTION $\theta$

S5

END

FIG.3

START

S11 — READ COUNT VALUE INDICATIVE OF NUMBER OF OUTPUT PULSE SIGNALS OF DISTANCE SENSOR

S12 — READ RECEIVED DATA BY GPS UNIT AT THE SAME POSITIONING TIME

S13 — CALCULATE TRAVELLING SPEED VGPS IN ACCORDANCE WITH RECEIVED DATA BY GPS UNIT

CALCULATE NUMBER OF PULSES PER UNIT TIME OF OUTPUT PULSES OF DISTANCE SENSOR — S14

S15 — CALCULATE RUNNING DISTANCE α PER ONE PULSE

END

# FIG.4

START

READ OUTPUT DATA OF
ACCELERATION SENSOR

S21

READ RECEIVED DATA BY
GPS UNIT AT THE SAME
POSITIONING TIME

S22

CALCULATE TRAVELLING
VELOCITY $V_{GPS}$ IN
ACCORDANCE WITH
RECEIVED DATA BY GPS
UNIT

S23

CALCULATE TRAVELLING
VELOCITY $V_n$ BY
INTEGRATING OUTPUT
DATA OF ACCELERATION
SENSOR

S24

CALCULATE GAIN
CORRECTING COEFFICIENT
$G_k$ FOR ACCELERATION
SENSOR SUCH THAT $V_{GPS}$
AND $V_n$ ARE EQUAL

S25

END

# FIG.5